# EUROPEAN PATENT SPECIFICATION

(11) **EP 4 211 366 B1**
(45) Date of publication and mention of the grant of the patent: **23.07.2025**
(21) Application number: 21867776.3
(22) Date of filing: 13.09.2021
(51) Int. Cl.: F16H 7/12

(54) **TENSIONER ADJUSTER**
SPANNEREINSTELLVORRICHTUNG
DISPOSITIF DE RÉGLAGE DE TENDEUR

(30) Priority: 14.09.2020 US 202063078261 P
(43) Date of publication of application: 19.07.2023
(73) Proprietor: Gates Corporation, Denver, CO 80202 (US)
(72) Inventor: FORTES, Rafael, Rodrigues, 12305-810 Jacareí, São Paulo (BR)
(74) Representative: Carpmaels & Ransford LLP
(86) International application number: PCT/US2021/050106
(87) International publication number: WO 2022/056405

(56) References cited:
- EP-A1- 0 176 267
- US-A- 4 285 676
- US-A- 4 925 351
- US-A1- 2005 192 142
- US-A1- 2008 153 642
- US-A1- 2008 234 083
- US-A1- 2010 137 084
- US-A1- 2014 353 128

## Description

### BACKGROUND

### Field of the Disclosure

The present invention relates to tensioners, and more specifically, belt tensioners having adjusters for easily and precisely installing the tensioners in operative relation with a belt, such as a timing or drive belt.

### Description of Related Technology

Belt tensioners have been utilized in many belt systems. It is conventional practice in belt tensioners to apply a constant belt tensioning force which compensates for increases in belt length due to wear and other factors. A common type of conventional belt tensioner includes a fixed structure and a pivoted structure pivotally mounted on the fixed structure by a pivot assembly. The pivoted structure carries a belt-engaging pulley. A coil or torsion spring is mounted in surrounding relation to the pivot assembly and has its ends connected between the fixed and pivoted structures so as to bias the latter toward a position of maximum belt take-up so that the spring biasing force decreases as the pivoted structure moves from a position of minimum take up to a position of maximum belt take-up. Despite this varying spring force within the range of movement provided, a substantially constant belt tension is maintained.

When belt tensioners are installed on an engine they should be installed so as to apply a predetermined static tensioning force to the belt. In addition, the pivoted structure, which conventionally carries the pulley, is movable between two positions defined by end stops. During the adjustment or installation of the tensioner, an adjusting member or an eccentric adjusting member, which forms part of the fixed structure, is adjusted to move the pivoted structure into a position between the stops, wherein the belt tensioning pulley is disposed in a predetermined static tensioning relation to the belt.

Many adjusters for tensioners are manufactured as a two-piece construction, for example, in an injection molded, die cast or stamped process. The two-piece manufacturing process can be costly and time-consuming due to, for example, the re-tooling efforts that are needed when manufacturing different sized eccentric adjusters and different sized eccentric tensioners.

US 2008/234083 A1 discloses a tensioner comprising a shaft having a shaft portion engageable with a mounting surface, a pivot arm pivotally engaged with the shaft about an axis, a plate fixedly attached to the shaft, the plate disposed on an end of the shaft opposite the shaft portion, a torsion spring engaged between the pivot arm and the plate for biasing the pivot arm, the torsion spring disposed opposite the shaft portion and immediately adjacent the plate, a pulley journalled to the pivot arm, the center of rotation of the pivot arm disposed eccentrically from the center of rotation of the plate, the pivot arm having a tab which cooperates with a portion on the plate to indicate a relative position of the pivot arm with respect to the plate during installation, and a tool receiving portion on the plate for rotationally adjusting the plate during installation.

What is needed is a tensioner adjuster that can be more economically and sustainably manufactured for a variety of differently sized eccentric adjusters and tensioners.

### SUMMARY

The present invention provides a one-piece tensioner adjuster as recited in claim 1 and a tensioner as recited in claim 7. Optional features are recited in the dependent claims.

Other aspects of the invention will be explained or made obvious by the following description of the invention and the accompanying drawings.

### BRIEF DESCRIPTION OF THE DRAWINGS

The accompanying drawings, which are incorporated in and form a part of the specification, illustrate preferred embodiments of the present invention, and together with a description, serve to explain the principles of the invention.
FIG. 1 is a perspective view of an embodiment of a tensioner with an adjuster of the present invention.
FIG. 2 is another perspective view of an embodiment of the tensioner with an adjuster of the present invention.
FIG. 3 is a top plan view of an embodiment of the tensioner with an adjuster of the present invention.
FIG. 4 is a cross-sectional view of an embodiment of the tensioner with an adjuster of the present invention taken along lines A-A of FIG. 3.
FIG. 5 is an exploded view of an embodiment of the tensioner with an adjuster of the present invention.
FIG. 6 is a perspective view of an embodiment of the adjuster for the tensioner of the present invention.
FIG. 7 is another perspective view of an embodiment of the adjuster for the tensioner of the present invention.
FIG. 8 is another perspective view of an embodiment of the adjuster of the present disclosure after being stamped and prior to forming the adjuster into the structure of the adjuster for use in installing the tensioner of the present invention.
FIG. 9 is a top view of an embodiment of the adjuster for the tensioner of the present invention.
FIG. 10 is a bottom view of an embodiment of the adjuster for the tensioner of the present invention.
FIG. 11 is a left side view of an embodiment of the adjuster for the tensioner of the present invention.
FIG. 12 is a right side view of an embodiment of the adjuster for the tensioner of the present invention.
FIG. 13 is a front side view of an embodiment of the adjuster for the tensioner of the present invention.
FIG. 14 is a back side of an embodiment of the adjuster for the tensioner of the present invention.

### DETAILED DESCRIPTION

The tensioner adjuster of the present invention comprises an eccentric adjuster. The eccentric adjuster may be used to move a tensioner into proper engagement with a belt during installation. The eccentric adjuster may be manufactured by stamping a single piece of material, e.g., a sheet metal material, and forming the single piece of stamped material into an adjuster structure that assists in the installation of a belt tensioner, for example, onto a motor vehicle engine by moving the pivoted structure into a position between stops in which the belt tensioning pulley is placed into predetermined static tensioning relation to the belt. The process of stamping the adjuster material into a single piece and forming the single piece of stamped material into the adjuster structure enables eccentric adjusters to be manufactured with different sizes for use with different sized eccentric tensioners, without requiring tooling changes during manufacturing. The adjusters of the present disclosure are accordingly made without expensive and time-consuming re-tooling efforts during manufacturing, which substantially reduces per unit adjuster manufacturing costs. The reduction in re-tooling during manufacturing not only provides significant economic benefits, but also creates a more environmentally sustainable manufacturing process.

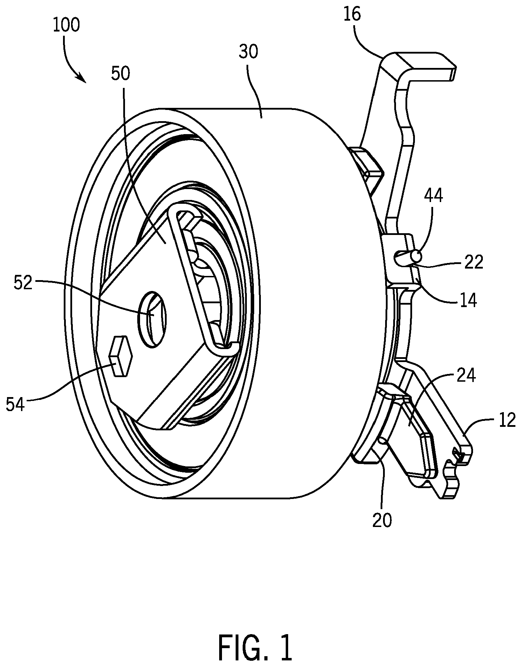

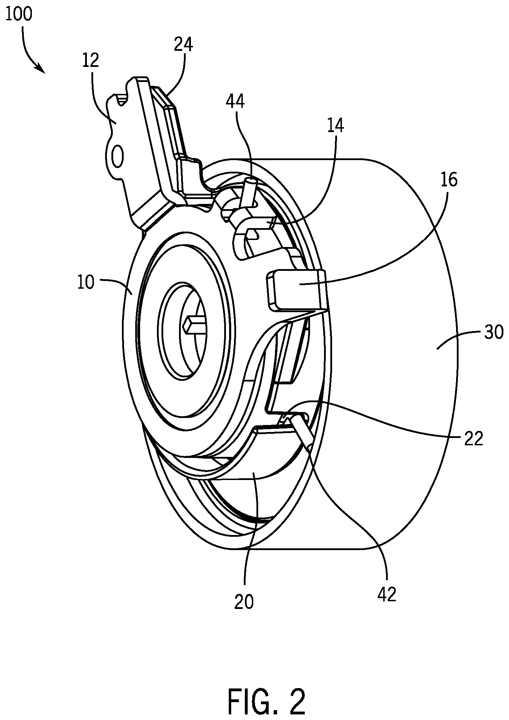

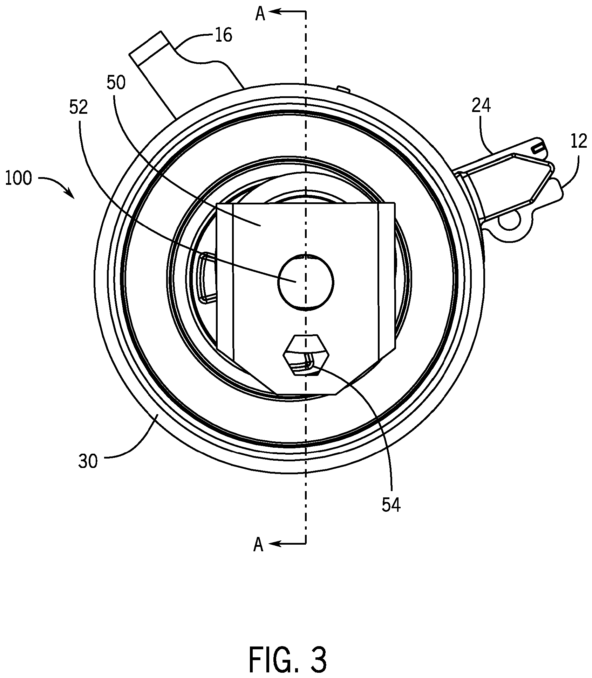

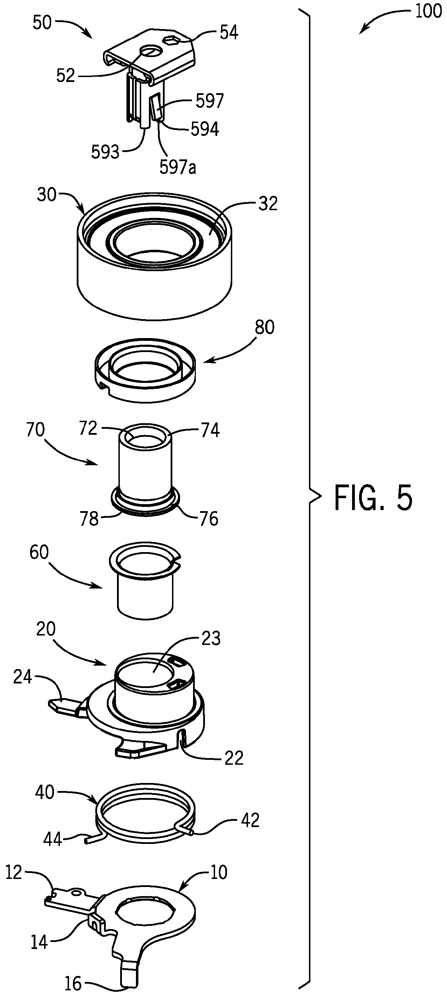

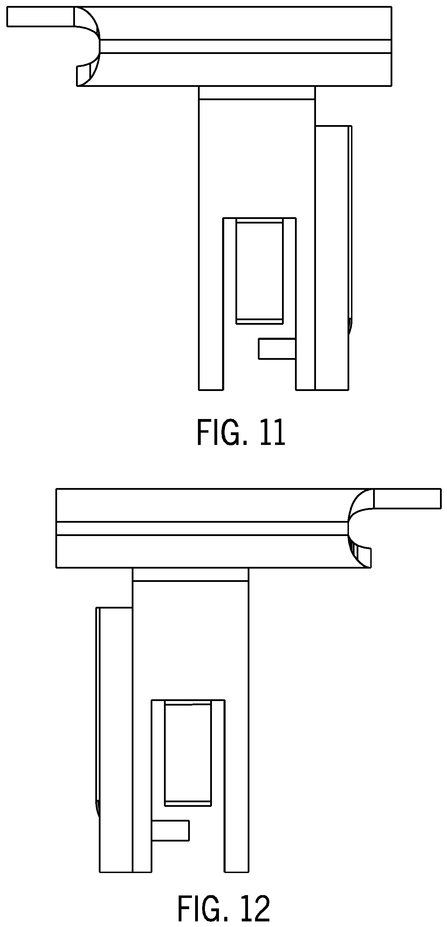

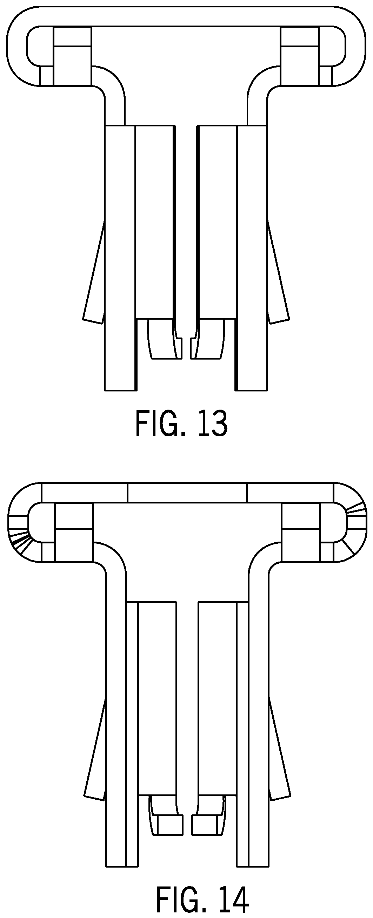

FIGS. 1-14 illustrate a tensioner 100 with a one-piece adjuster 50 according to an embodiment of the present invention.

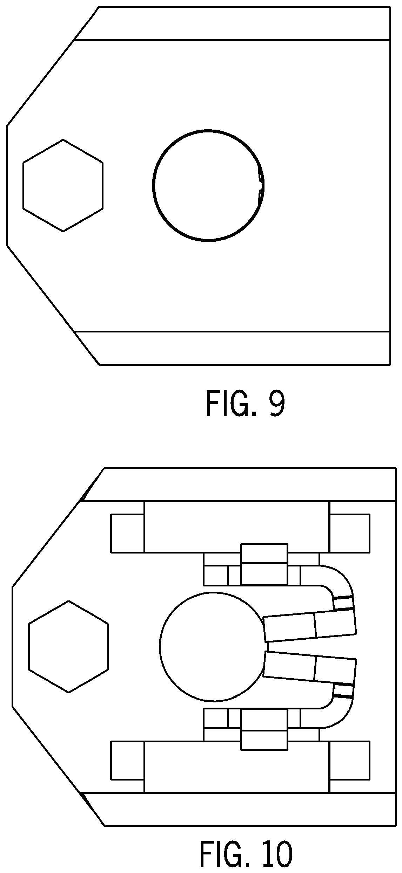

Tensioner 100 comprises an adjuster 50 that is eccentric and used to move tensioner 100 into proper engagement with a belt during installation, for example, during the installation of tensioner 100 onto a motor vehicle engine, as discussed herein. It should be appreciated from the foregoing that FIGS. 9-14 illustrate the same adjuster embodiment illustrated in FIGS. 1-8.

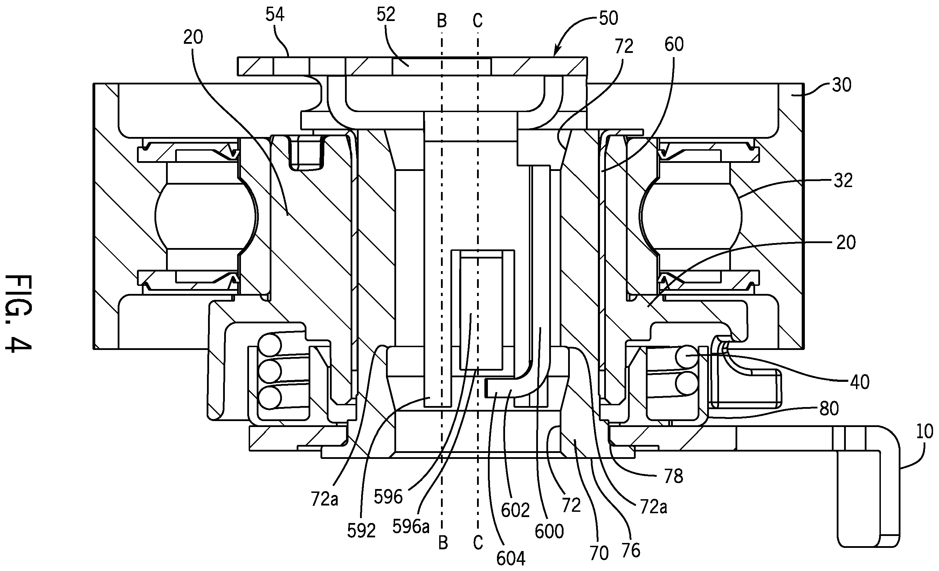

During installation, adjuster 50 is rotated about a fastener, such as a bolt or stud or any other suitable fastener (fastener not shown), that passes through an opening 52 defined in adjuster 50. When the fastener extends through opening 52, the fastener is engaged with, or guided or held in place by, engaging members 600, 700 (of respective first and second guide portions 59a, 59b of adjuster 50 as discussed below). The fastener inserted into opening 52 extends to a distal end of tensioner 100 where the fastener secures tensioner 100 to, for example, a motor vehicle engine. The center of the fastener that extends through opening 52 and is guided or held by the first and second engaging members 600, 700 defines an axis of rotation B-B for the fastener (See, FIG. 4). Axis B-B is eccentrically offset from an axis of rotation of pulley 30 C-C (See, FIG. 4), and is eccentrically offset from an axis of rotation of the pivotal arm 20 of tensioner 100 (the axis of rotation for arm 20 is unlabeled). Eccentric adjuster 50 is used to precisely load a belt (not show) that is engaged with pulley 30 with a predefined tension by compensating for all component tolerances. Adjuster 50 is used during belt installation and locked in place once the belt is installed by fully engaging the fastener with a mounting surface, for example, with motor vehicle engine. Eccentric in the term eccentric adjuster 50 refers to the axis of fastener rotation B-B not being coaxial with the axis of rotation C-C of a pulley 30 or with the axis of rotation of arm 20, which is defined by another axis (unlabeled) that is substantially parallel to axis B-B.

Pulley 30 engages a belt to provide belt tension or load. Pulley 30 is journalled to arm 20 about a bearing or bearing assembly 32. Pulley 30 is engaged with an outer race of bearing 32. Bearing 32 comprises a ball bearing but may comprise a needle bearing or any other suitable bearing.

Arm 20 comprises or has a center bore or opening 23 defined therein. Arm 20 is biased by a coil or torsion spring 40 to urge pulley 30 into the belt (not shown). Arm 20 pivots about sleeve 70 about a bushing 60. Bushing 60 allows arm 20 to rotate smoothly about sleeve 70 and contributes to friction damping. Bushing 60 may comprise a low friction material for facilitating the relative movement of arm 20, e.g., a material comprising brass, copper and sintered metal. The pivotal movement of arm 20 about sleeve 70 results in a translational movement of pulley 30 that allows tensioner 100 to compensate for any changes in belt length as the belt stretches over time and as the drive length changes from thermal expansion.

Arm 20 is engaged with an inner race of bearing 32. Pulley 30 is pressed into engagement against the belt by a torsion spring 40. A first end or arm engaging end 42 of torsion spring 40 is engaged with a slot 22 defined in arm 20. A second opposite end or base engaging end 44 of torsion spring 40 is engaged with base 10 in a slot (not labeled) defined in a spring engaging member 14 of base 10.

Base 10 is statically fixed during installation of tensioner 100 to a mounting surface, such as an engine of a motor vehicle (not shown). Spring torque from torsion spring 40 and the effective arm length of arm 20 creates a belt load or tension. Tang 16 of base 10 engages a cooperating receiving member on the mounting surface such as a hole in the mounting surface (not shown) and is used to prevent rotation of base 10 during installation of tensioner 100. While base 10 is used to mount tensioner 100, base 10 is also used to secure an end of the torsion spring 40, e.g., to secure base engaging end 44 of torsion spring 40 in a slot defined in spring engaging member 14 of base 10.

Sleeve 70 is attached or fixed to base 10, e.g., via a mechanical interference fit, and is generally or substantially cylindrically shaped having a bore 72 defined therein. Sleeve 70 and its bore extend from a distal end 76 of sleeve 70 to a proximal end 74 of sleeve 70. Distal end 76 of sleeve 70 comprises a circumferential collar 78. Sleeve 70 further comprises a shoulder 72a that extends circumferentially around, and is defined by, an interior or inside wall of the bore 72 defined in sleeve 70 (See FIG. 4 showing shoulder 72a of sleeve 70).

A damper 80 is mounted to sleeve 70 and arranged in tensioner 100 between base 10 and arm 20 to act as a damping control member. Damper 80 is held axially by sleeve 70 and is rotationally fixed by, for example, spring 40 being inserted through a slot or opening in the damper 80 that may align rotationally with the slot defined in the spring engaging member 14 of base 20. Damper 80 controls and reduces oscillations of arm 20 during operation and may comprise and material suitable for reducing and controlling oscillations of arm 20.

Arm 20 comprises an arm indicator 24 that cooperates with a base indicator 12 of base 10 to display when tensioner 100 is properly installed and loaded during installation. Pulley 30 comprises a belt engaging surface (not labeled), which may be flat as shown, or any other suitable shape or profile for engaging a belt.

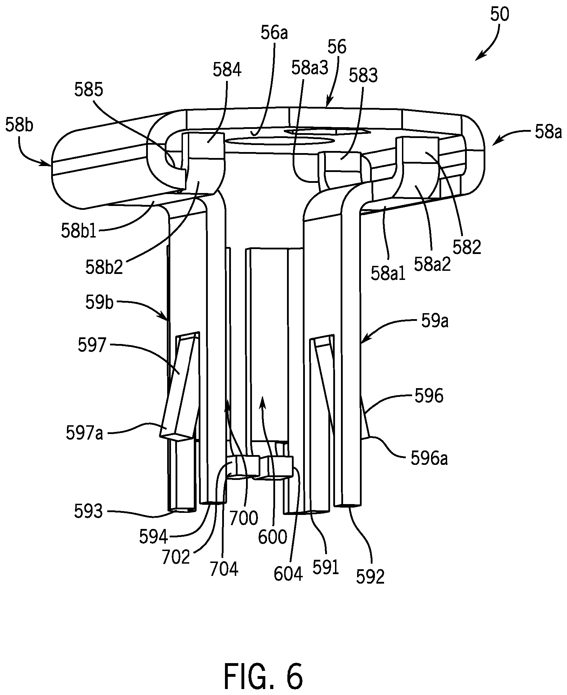

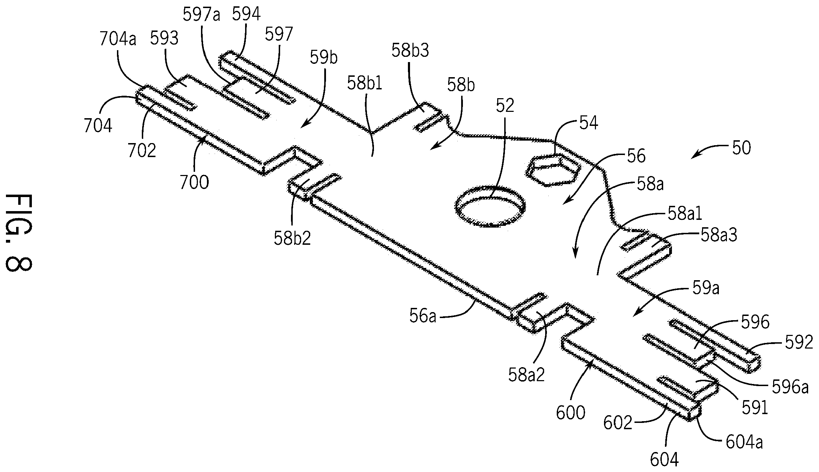

Referring now more specifically to an embodiment of a one-piece adjuster of the present disclosure, FIGS. 1-14 illustrate one embodiment of a tensioner 100 having an adjuster 50, and one embodiment of the adjuster 50 isolated by itself for use with a tensioner, such as tensioner 100. In particular, FIGS. 6-14 illustrate adjuster 50 isolated from tensioner 50 but for use with a tensioner such as tensioner 100. Adjuster 50 may be manufactured by stamping a single piece of material, e.g., a single piece of sheet metal material, into a substantially flat one-piece structure such as the structure illustrated in FIG. 8. The substantially flat one-piece stamped adjuster material may then be formed into an adjuster structure, such as the structure of adjuster 50 illustrated in FIGS. 1, 3-7, and 9-14 by, for example, folding the stamped adjuster material using a rolling process. The adjuster 50 as formed comprises a substantially planar plate portion 56 and first and second opposing guide portions 59a, 59b. First and second guide portions are connected to opposing sides of planar plate portion 56 via first and second neck portions 58a, 58b, respectively. First and second guide portions 59a, 59b further comprise first and second engaging members 600, 700, respectively, each of which is constructed and arranged to engage the fastener, such as the bolt or stud (as discussed above), when the fastener is inserted into adjuster 50 for rotation about axis B-B during installation of tensioner 100.

Plate portion 56 comprises, or defines therein, a tool receiving portion 54. During installation, a tool, such as an Allen wrench (not shown), may be inserted or engaged at tool receiving portion 54 of adjuster 50 for rotating adjuster 50 about the fastener. Adjuster 50 may be rotated about the fastener that is inserted through opening 52 of plate portion 56. The fastener extends past opening 52 substantially perpendicular to plate portion 56 to a distal end of tensioner 100, where the fastener secures or mounts the tensioner to, for example, a motor vehicle engine. The fastener portion that extends beyond opening 52 is engaged with first and second fastener engaging members 600, 700 of first and second guide members 59a, 59b, respectively, as discussed below.

First neck portion 58a is formed so as to be curved or bent into a structure that is substantially or generally U-shaped with a parallel section 58a1 of the U-shape extending substantially or generally radially inwardly and substantially parallel to plate portion 56. Extending from opposing sides of parallel section 58a1 are first and second reinforcing supports 58a2, 58a3, respectively, each of which is formed so as to be curved or bent with sections 582, 583 that extend generally parallel to axis B-B (or the axis of bore 72 defined in sleeve 70) and perpendicular to plate portion 56 towards an underside or proximal surface 56a of plate portion 56. Sections 582, 583 of reinforcing supports 58a2, 58a3 each extend to the underside or proximal surface 56a without physically contacting surface 56a.

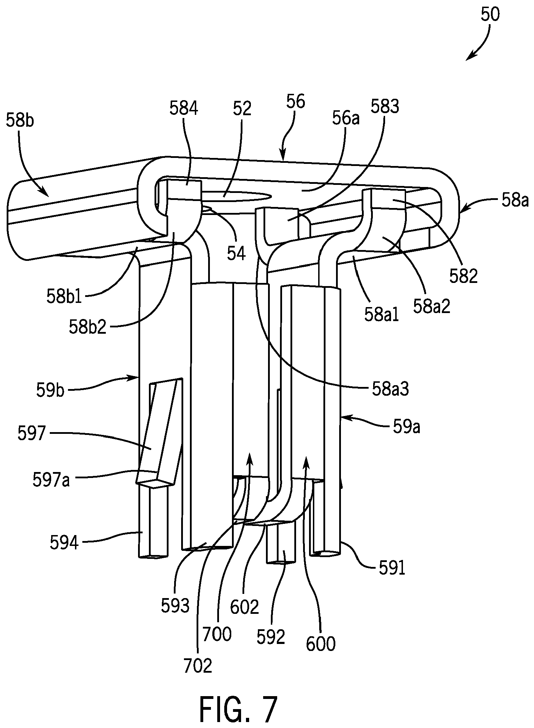

Similar to first neck portion 58a, second neck portion 58b is formed so as to be curved or bent into a structure that is substantially or generally U-shaped with a parallel section 58b1 of the U-shape extending substantially or generally radially inwardly and substantially parallel to plate portion 56. Extending from opposing sides of parallel section 58b1 are first and second reinforcing supports 58b2, 58b3, respectively, each of which is formed so as to be curved or bent with sections 584, 585 that extend generally parallel to axis B-B (or the axis of bore 72 defined in sleeve 70) and perpendicular to plate portion 56 towards the underside or proximal surface 56a of plate portion 56. It should be appreciated and understood that while reinforcing support 58b3 is shown in the adjuster figure of FIG. 8, reinforcing support 58b3 is obscured and not fully shown in FIGS. 6 and 7, but is located in FIGS. 6 and 7 in a position opposite 58b2 similar to reinforcing support 58a3 of first neck portion 58a, which is clearly shown in FIGS. 6 and 7. Sections 584, 585 of reinforcing supports 58b2, 58b3 each extend to the underside or proximal surface 56a without physical contacting surface 56a. When adjuster 50 is rotated during installation, a relatively high torque is applied by the head of the fastener (e.g., a bolt head) to the adjuster 50, e.g., in the range of 30-50 N·m. This high torque imparts a force to adjuster plate portion 56, which may cause plate portion 56 to mechanically deform, e.g., deform or bend in a generally downwardly direction from the perspective of looking through opening 52 from a topside surface of plate 56 along the axis of rotation B-B towards the distal end of adjuster 50. Such deformation can cause adjuster 50 to perform poorly resulting in improper tensioning of tensioner 100 during its installation and even leading to breakage or failure of plate portion 56. Reinforcing supports 58a1, 58a2, 58b2, 58b3 act to reduce or eliminate such mechanical deformation that may occur to adjuster plate portion 56 when such torque is applied during installation, thereby improving the quality, effectiveness and durability of adjuster 50 and of tensioner 100 having adjuster 50.

First and second guide portions 59a, 59b are integral with, and extend generally longitudinally from, first and second neck portions 58a, 58b, respectively, and are generally perpendicular to plate portion 56 and parallel to axis B-B. First guide portion 59a comprises two legs 591, 592 extending longitudinally and substantially perpendicular to plate potion 56 and substantially parallel to axis B-B. Positioned between legs 591, 592 is a sleeve engaging tab 596 that extends generally radially outwardly from axis B-B to a distal end portion 596a of tab 596. Distal end portion 596a extends radially outwardly to engage the shoulder 72a of sleeve 70. Shoulder 72a extends circumferentially around, and is defined by, an interior or inside wall of the bore 72 defined in sleeve 70 (See FIG. 4 showing shoulder 72a of sleeve 70).

Second guide portion 59b, which is opposite first guide portion 59a, comprises two legs 593, 594, which like legs 591, 592 of first guide portion 59a, extend generally longitudinally and substantially perpendicular to plate potion 56 and substantially parallel to axis B-B. Positioned between legs 593, 594 is a sleeve engaging tab 597 that extends generally radially outwardly from bolt axis B-B to a distal end portion 597a of tab 597. Distal end portion 597a extends radially outwardly to engage the shoulder 72a of sleeve 70. Sleeve engaging tabs 596 and 597 and their respective distal end portions 596a, 597a engaging sleeve shoulder 72a act to lock or engage adjuster 50 with sleeve 70 so that adjuster 50 can be secured or held axially in place during transport and assembly, e.g., assembly onto a motor vehicle engine. In an embodiment, sleeve engaging tabs 596 and 597 may be formed so as to be flexible and biased radially outwardly to engage and lock adjuster 50 with sleeve 70 so that adjuster 50 can be secured or held in place during transport and assembly, e.g., onto a motor vehicle engine. It should be appreciated that in certain embodiments, an outside diameter defined by a substantially circular shape drawn around, and defined by, the outside surface of legs 591, 592, 593, 594 may be slightly less than an inside diameter of the bore 72 of sleeve 70 so that legs 591, 592, 593, 594 of first and second guide member 59a, 59b may be inserted into and rotatable within bore 72 of sleeve 70.

First guide portion 59a further comprises a fastener engaging member 600 that is constructed and arranged to engage or interface with the fastener that extends through opening 52 of adjuster 50 to enable adjuster 50 to be guided by and rotatable about the fastener, i.e., about axis B-B during the installation of tensioner 100. Fastener engaging member 600 extends from, and is integral with, leg portion 591 and includes a body section that extends longitudinally and substantially perpendicular to plate portion 56 and parallel to axis B-B. A foot 602 extends from the body section in a substantially or generally radially inwardly direction towards the axis B-B so as to engage or interface with the fastener inserted into opening 52 of arm 50 for installation of tensioner 100. Fastener engaging member 600 may be substantially or generally L-shaped as illustrated, but may form any other suitable shape that enables member 600 to engage the fastener and ensure that the fastener, when inserted into arm hole 52, stays substantially perpendicular to plate portion 56 and parallel to the pulley rotational axis C-C and to the arm rotational axis (not labeled) for proper installation of tensioner 100. Foot 602 may include a distal or toe end 604 that is configured to engage or interface with the fastener inserted into the opening 52 of arm 50. In the illustrated embodiment, engaging surface 604a of toe end 604 engages the fastener when the fastener is inserted into the opening 52 of arm 50.

Second guide portion 59b, like first guide portion 59a, further comprises a fastener engaging member 700 that is constructed and arranged to engage or interface with the fastener to enable adjuster 50 to be guided by and rotatable about the fastener, i.e., about axis B-B, during the installation of tensioner 100. Fastener engaging member 700 extends from, and is integral with, leg portion 593 and includes a body section that extends longitudinally and substantially perpendicular to plate portion 56 and parallel to axis B-B (and may extend in substantially the same plane as the body section of fastener engaging member 600). A foot 702 extends from the body section in a substantially or generally radially inwardly direction towards the axis B-B so as to engage or interface with the fastener inserted into opening 52 of arm 50 for the installation of tensioner 100. Fastener engaging member 700 may be substantially or generally L-shaped as illustrated, but may form any other suitable shape that enables member 700 to engage the fastener and ensure that the fastener, when inserted into arm hole 52, stays substantially perpendicular to plate portion 56 and parallel to both the pulley rotational axis C-C and to the arm rotational axis (not labeled) for proper installation of tensioner 100. Foot 702 includes a distal or toe end 704 that is configured to engage or interface with the fastener inserted into the opening 52 of arm 50. In the illustrated embodiment, engaging surface 704a of toe end 704 engages the fastener when the fastener is inserted into opening 52 of arm 50.

Foot 602 and foot 702 together may be angled radially inwardly at an angle, e.g., angled inwardly towards one another, such that that their respective distal or toe ends (and surfaces) form a curvature or arc that interfaces or engages with the curvature or arc formed by the outside surface of the fastener. That is, toe ends 604, 704 of foot 602 and foot 702 may be generally or substantially arcuate or curved to engage with, interface with or substantially conform to the outside surface of the fastener. Foot 602 and foot 702 may form a V-shape when viewed, for example, from a direction looking through opening 52 and parallel to axis B-B towards a distal end of tensioner 100. Together, foot 602 and foot 702 and their respective length, which extend radially inwardly to axis B-B to engage the fastener, allows adjuster 50 to hold the fastener substantially perpendicular to plate portion 56 and parallel to the pulley rotational axis C-C and to the arm rotational axis for proper installation of tensioner 100, i.e., while adjuster 50 is rotated about the fastener.

Forming the adjuster of the present disclosure with first and second guide portions and respective fastener engaging members from a single piece of material allows the adjusters and tensioners of the present disclosure to be easily manufactured with different sized eccentric tensioners and different sized eccentric adjusters. For example, the first and second guide portions and the respective legs of the adjusters disclosed herein may be easily stamped and formed into various sizes and dimensions without requiring serious modification to tools used during manufacturing, thereby enabling the legs to fit into tensioners having sleeves of varying diameters (and hence tensioner pivot arms having center bores of varying diameters). The first and second guide portions and their respective fastener engaging members may likewise be easily stamped and formed into various sizes and dimensions without requiring serious modification to manufacturing tools, enabling the fastener engaging members to engage fasteners of different diameters and allowing the adjusters to be easily manufactured for use with tensioner adjusters of varying eccentricities. In one example, the length of each foot of the fastener engaging members can be easily cut to different lengths and formed so that they may extend to corresponding different lengths radially inwardly, thereby allowing the fastener engaging members to be made so as to engage larger or smaller fasteners and operate with larger or smaller sized eccentric adjusters, e.g., 3mm, 4mm or 5mm eccentric adjusters.

Although a form of the invention has been described herein, it will be obvious to those skilled in the art that variations may be made in the construction and relation of parts without departing from the scope of the invention described herein.

## Claims

1. A one-piece tensioner adjuster (50) comprising:
a plate portion (56) comprising an opening (52) for receiving a fastener for installation of a tensioner (100);
a first neck portion (58a) extending from the plate portion (56); and
a second neck portion (58b) extending from the plate portion (56) on a side of the plate portion (56) opposite from the side of the plate portion (56) from which the first neck portion (58a) extends; **characterised in that**:
the first neck portion (58a) is a first curved neck portion and the second neck portion (58b) is a second curved neck portion; wherein the tensioner adjuster further comprises:
a first guide portion (59a) extending from the first curved neck portion (58a) and comprising a fastener engaging member (600) constructed and arranged to engage the fastener;
a second guide portion (59b) extending from the second curved neck portion (58b) and comprising a fastener engaging member (700) constructed and arranged to engage the fastener;
(i) a first reinforcing support (58a2) that extends from the first curved neck portion (58a);
(ii) a second reinforcing support (58a3) that extends from a side of the first curved neck portion (58a) that is opposite the side from which the first reinforcing support (58a2) extends;
(iii) a third reinforcing support (58b2) that extends from a side of second curved neck portion (58b); and
(iv) a fourth reinforcing support (58b3) that extends from a side of the second curved neck portion (58b) that is opposite the side of the second curved neck portion (58b) from which the third reinforcing support (58b2) extends.

2. The one-piece tensioner adjuster of claim 1, wherein:
(i) the fastener engaging member (600) of the first guide portion (59a) comprises a body and a foot (602) extending from the body of the first guide portion (59a) radially inwardly towards an axis of rotation of the fastener to engage the fastener, and
(ii) the fastener engaging member (700) of the second guide portion (59b) comprises a body and a foot (702) extending from the body of the second guide portion (59b) radially inwardly towards the axis of rotation of the fastener to engage the fastener.

3. The one-piece tensioner adjuster of claim 2, wherein:
(i) the foot (602) of the first guide portion (59a) comprises a toe end (604) to engage the fastener, and
(ii) the foot (702) of the second guide portion (59b) comprises a toe end (704) to engage the fastener.

4. The one-piece tensioner adjuster of claim 1, wherein:
(i) the fastener engaging member (600) of the first guide portion (59a) extends radially inwardly towards an axis of rotation of the fastener to engage the fastener during rotation of the one-piece adjuster, and
(ii) the fastener engaging member (700) of the second guide portion (59b) extends radially inwardly towards an axis of rotation of the fastener to engage the fastener during rotation of the one-piece adjuster.

5. The one-piece tensioner adjuster of claim 2, wherein:
a fastener engaging surface of the foot (602) of the first guide portion (59a) and a fastener engaging surface of the foot (702) of the second guide portion (59b) form an arc having a radius of curvature that is substantially equal to a radius of curvature of the fastener.

6. The one-piece tensioner adjuster of claim 2, wherein:
(i) the foot (602) of the first guide portion (59a) comprises a fastener engaging surface constructed to engage the fastener, and
(ii) the foot (702) of the second guide portion (59b) comprises a fastener engaging surface to engage the fastener.

7. A tensioner (100) comprising:
a base (10);
a sleeve (70) connected to the base (10), the sleeve (70) having a center bore (72) defined therein;
an arm (20) pivotally engaged with the base (10) about the sleeve (70);
a pulley (30) journaled to the arm (20);
a torsion spring (40) engaged between the arm (20) and the base (10); and
a one-piece eccentric tensioner adjuster (50) according to claim 1, rotatably mounted within the center bore (72) of the sleeve (70).

8. The tensioner of claim 7, wherein
(i) the fastener engaging member (600) of the first guide portion (59a) extends radially inwardly towards an axis of rotation of the fastener to engage the fastener, and
(ii) the fastener engaging member (700) of the second guide portion (59b) extends radially inwardly towards an axis of rotation of the fastener to engage the fastener.

9. The tensioner of claim 7, wherein
(i) the fastener engaging member (600) of the first guide portion (59a) comprises a body extending substantially perpendicular to the plate portion (56) and a foot (602) extending substantially perpendicular to the body of the first guide portion (59a) and radially inwardly towards an axis of rotation of the fastener to engage the fastener, and
(ii) the fastener engaging member (700) of the second guide portion (59b) comprises a body extending substantially perpendicular to the plate portion (56) and a foot (702) extending substantially perpendicular to the body of the second guide portion (59b) and radially inwardly towards an axis of rotation of the fastener to engage the fastener.

10. The tensioner of claim 7, wherein
(i) the fastener engaging member (600) of the first guide portion (59a) is substantially L-shaped to engage the fastener, and
(ii) the fastener engaging member (700) of the second guide portion (59b) is substantially L-shaped to engage the fastener.

11. The tensioner of claim 7, wherein:
(i) the first neck portion (58a) is substantially U-shaped and comprises a section (58a1) that is substantially parallel to the plate portion (56) and extends radially inwardly, optionally towards an axis of rotation of the fastener; and
(ii) the second neck portion (58b) is substantially U-shaped and comprises a section (58b1) that is substantially parallel to the plate portion (56) and extends radially inwardly, optionally towards the axis of rotation of the fastener.

12. The tensioner of claim 7, which further comprises a substantially cylindrically shaped bushing (60) positioned between the arm (20) and the sleeve (70) about which the arm (20) is pivotally engaged with the base (10).

13. The tensioner of claim 7, wherein:
(i) the first curved neck portion (58a) comprises a parallel section (58a1) that is substantially parallel to the plate portion (56) and extends substantially radially inwardly, and
(ii) the second curved neck portion (58b) comprises a parallel section (58b1) that is substantially parallel to the plate portion (56) and extends substantially radially inwardly, and wherein:
(a) the first reinforcing support (58a2) extends from a side of the parallel section (58a1) of the first curved neck portion (58a),
(b) the second reinforcing support (58a3) extends from a side of the parallel section (58a1) of the first curved neck portion (58a) that is opposite the side of the first curved neck portion (58a) from which the first reinforcing support (58a2) extends,
(c) the third reinforcing support (58b2) extends from a side of the parallel section (58b1) of the second curved neck portion (58b), and
(b) the fourth reinforcing support (58b3) extends from a side of the parallel section (58b1) of the second curved neck portion (58b) that is opposite the side of the second curved neck portion (58b) from which the third reinforcing support (58b2) extends.

14. The tensioner of claim 7, wherein:
(i) the fastener engaging member (600) of the first guide portion (59a) comprises a body extending substantially parallel to an axis of rotation of the fastener and a foot (602) extending from the body of the first guide portion (59a), the body and foot (602) of the first guide portion (59a) forming a substantially L-shaped structure, and
(ii) the fastener engaging member (700) of the second guide portion (59b) comprises a body extending substantially parallel to the axis of rotation of the fastener and a foot (702) extending from the body of the second guide portion (59b), the body and foot (702) of the second guide portion (59b) forming a substantially L-shaped structure.

15. The one-piece tensioner adjuster of claim 1, wherein:
the first, second, third and fourth reinforcing supports (58a2, 58a3, 58b2, 58b3) are arranged to aid in at least reducing deformation of the plate portion (56) resulting from any torque applied to the one-piece adjuster during installation of the tensioner.

16. The one-piece tensioner adjuster of claim 15, wherein:
(i) the first curved neck portion (58a) comprises a parallel section (58a1) that is substantially parallel to the plate portion (56), and
(ii) the second curved neck portion (58b) comprises a parallel section (58b1) that is substantially parallel to the plate portion (56),
(iii) the first reinforcing support (58a2) extends from a side of the parallel section (58a1) of the first curved neck portion (58a),
(iv) the second reinforcing support (58a3) extends from a side of the parallel section (58a1) of the first curved neck portion (58a) that is opposite the side of the first curved neck portion (58a) from which the first reinforcing support (58a2) extends,
(v) the third reinforcing support (58b2) extends from a side of the parallel section (58b1) of the second curved neck portion (58b), and
(vi) the fourth reinforcing support (58b3) extends from a side of the parallel section (58b1) of the second curved neck portion (58b) that is opposite the side of the second curved neck portion (58b) from which the third reinforcing support (58b2) extends.

17. The one-piece tensioner adjuster of claim 16, wherein
(i) the parallel section (58a1) of the first curved neck portion (58a) extends substantially radially inwardly towards an axis of rotation of the fastener, and
(ii) the parallel section (58b1) of the second curved neck portion (58b) extends substantially radially inwardly towards the axis of rotation of the fastener.

18. The one-piece tensioner adjuster of claim 15, wherein
(i) the first guide portion (59a) comprises a first leg (591) and a second leg (592), the first and second legs (591, 592) of the first guide portion (59a) each extending longitudinally from and substantially perpendicular to the plate potion (56), and
(ii) the second guide portion (59b) comprises a third leg (593) and a fourth leg (594), each of the third and fourth legs (593, 594) extending longitudinally from and substantially perpendicular to the plate potion (56), and which further comprises
(a) a first sleeve engaging tab (596) positioned between the first and second legs (591, 592) and arranged to engage a shoulder of a sleeve (70), and
(b) a second sleeve engaging tab (597) positioned between the third and fourth legs (593, 594) and arranged to engage the shoulder of the sleeve (70), the first and second sleeve engaging tabs (596, 597) cooperating to prevent axial movement of the one-piece tensioner adjuster.

## Patentansprüche

1. Einteilige Spannereinstellvorrichtung (50), umfassend:
einen Plattenabschnitt (56), umfassend eine Öffnung (52) zum Aufnehmen eines Befestigungselements zur Installation eines Spanners (100);
einen ersten Halsabschnitt (58a), der sich vom Plattenabschnitt (56) erstreckt; und
einen zweiten Halsabschnitt (58b), der sich von dem Plattenabschnitt (56) an einer Seite des Plattenabschnitts (56) erstreckt, die der Seite des Plattenabschnitts (56), von der sich der erste Halsabschnitt (58a) erstreckt, gegenüberliegt; **dadurch gekennzeichnet, dass**:
der erste Halsabschnitt (58a) ein erster gebogener Halsabschnitt ist und der zweite Halsabschnitt (58b) ein zweiter gebogener Halsabschnitt ist; wobei die Spannereinstellvorrichtung ferner umfasst:
einen ersten Führungsabschnitt (59a), der sich von dem ersten gebogenen Halsabschnitt (58a) erstreckt und ein Befestigungselement-Eingriffsglied (600) umfasst, das dazu ausgebildet und angeordnet ist, mit dem Befestigungselement in Eingriff zu treten;
einen zweiten Führungsabschnitt (59b), der sich von dem zweiten gebogenen Halsabschnitt (58b) erstreckt und ein Befestigungselement-Eingriffsglied (700) umfasst, das dazu ausgebildet und angeordnet ist, mit dem Befestigungselement in Eingriff zu treten;
(i) eine erste Verstärkungsstrebe (58a2), die sich von dem ersten gebogenen Halsabschnitt (58a) erstreckt;
(ii) eine zweite Verstärkungsstrebe (58a3), die sich von einer Seite des ersten gebogenen Halsabschnitts (58a) erstreckt, die der Seite gegenüberliegt, von der sich die erste Verstärkungsstrebe (58a2) erstreckt;
(iii) eine dritte Verstärkungsstrebe (58b2), die sich von einer Seite des zweiten gebogenen Halsabschnitts (58b) erstreckt; und
(iv) eine vierte Verstärkungsstrebe (58b3), die sich von einer Seite des zweiten gebogenen Halsabschnitts (58b) erstreckt, die der Seite des zweiten gebogenen Halsabschnitts (58b) gegenüberliegt, von der sich die dritte Verstärkungsstrebe (58b2) erstreckt.

2. Einteilige Spannereinstellvorrichtung nach Anspruch 1, wobei
(i) das Befestigungselement-Eingriffsglied (600) des ersten Führungsabschnitts (59a) einen Körper und einen Fuß (602) umfasst, der sich von dem Körper des ersten Führungsabschnitts (59a) radial nach innen in Richtung einer Drehachse des Befestigungselements erstreckt, um mit dem Befestigungselement in Eingriff zu treten, und
(ii) das Befestigungselement-Eingriffsglied (700) des zweiten Führungsabschnitts (59b) einen Körper und einen Fuß (702) umfasst, der sich vom Körper des zweiten Führungsabschnitts (59b) radial nach innen in Richtung der Drehachse des Befestigungselements erstreckt, um mit dem Befestigungselement in Eingriff zu treten.

3. Einteilige Spannereinstellvorrichtung nach Anspruch 2, wobei
(i) der Fuß (602) des ersten Führungsabschnitts (59a) ein Zehenende (604) umfasst, um mit dem Befestigungselement in Eingriff zu treten, und
(ii) der Fuß (702) des zweiten Führungsabschnitts (59b) ein Zehenende (704) umfasst, um mit dem Befestigungselement in Eingriff zu treten.

4. Einteilige Spannereinstellvorrichtung nach Anspruch 1, wobei
(i) sich das Befestigungselement-Eingriffsglied (600) des ersten Führungsabschnitts (59a) radial nach innen in Richtung einer Drehachse des Befestigungselements erstreckt, um während der Drehung der einteiligen Einstellvorrichtung mit dem Befestigungselement in Eingriff zu treten, und
(ii) sich das Befestigungselement-Eingriffsglied (700) des zweiten Führungsabschnitts (59b) radial nach innen in Richtung einer Drehachse des Befestigungselements erstreckt, um während der Drehung der einteiligen Einstellvorrichtung mit dem Befestigungselement in Eingriff zu treten.

5. Einteilige Spannereinstellvorrichtung nach Anspruch 2, wobei
eine Befestigungselement-Eingriffsfläche des Fußes (602) des ersten Führungsabschnitts (59a) und eine Befestigungselement-Eingriffsfläche des Fußes (702) des zweiten Führungsabschnitts (59b) einen Bogen bilden, dessen Krümmungsradius im Wesentlichen gleich dem Krümmungsradius des Befestigungselements ist.

6. Einteilige Spannereinstellvorrichtung nach Anspruch 2, wobei
(i) der Fuß (602) des ersten Führungsabschnitts (59a) eine Befestigungselement-Eingriffsfläche umfasst, die dazu ausgebildet ist, mit dem Befestigungselement in Eingriff zu treten, und
(ii) der Fuß (702) des zweiten Führungsabschnitts (59b) eine Befestigungselement-Eingriffsfläche umfasst, um mit dem Befestigungselement in Eingriff zu treten.

7. Spanner (100), umfassend:
eine Basis (10);
eine Hülse (70), die mit der Basis (10) verbunden ist, wobei die Hülse (70) eine darin ausgebildete zentrale Bohrung (72) aufweist;
einen Arm (20), der drehbar mit der Basis (10) um die Hülse (70) verbunden ist;
eine Umlenkrolle (30), die an dem Arm (20) gelagert ist;
eine Torsionsfeder (40), die zwischen dem Arm (20) und der Basis (10) angeordnet ist; und
eine einteilige exzentrische Spannereinstellvorrichtung (50) nach Anspruch 1, die drehbar in der zentralen Bohrung (72) der Hülse (70) gelagert ist.

8. Spanner nach Anspruch 7, wobei
(i) sich das Befestigungselement-Eingriffsglied (600) des ersten Führungsabschnitts (59a) radial nach innen in Richtung einer Drehachse des Befestigungselements erstreckt, um mit dem Befestigungselement in Eingriff zu treten, und
(ii) sich das Befestigungselement-Eingriffsglied (700) des zweiten Führungsabschnitts (59b) radial nach innen in Richtung einer Drehachse des Befestigungselements erstreckt, um mit dem Befestigungselement in Eingriff zu treten.

9. Spanner nach Anspruch 7, wobei
(i) das Befestigungselement-Eingriffsglied (600) des ersten Führungsabschnitts (59a) einen Körper, der sich im Wesentlichen rechtwinklig zum Plattenabschnitt (56) erstreckt, und einen Fuß (602) umfasst, der sich im Wesentlichen rechtwinklig zum Körper des ersten Führungsabschnitts (59a) und radial nach innen in Richtung einer Drehachse des Befestigungselements erstreckt, um mit dem Befestigungselement in Eingriff zu treten, und
(ii) das Befestigungselement-Eingriffsglied (700) des zweiten Führungsabschnitts (59b) einen Körper, der sich im Wesentlichen rechtwinklig zum Plattenabschnitt (56) erstreckt, und einen Fuß (702) umfasst, der sich im Wesentlichen rechtwinklig zum Körper des zweiten Führungsabschnitts (59b) und radial nach innen in Richtung einer Drehachse des Befestigungselements erstreckt, um mit dem Befestigungselement in Eingriff zu treten.

10. Spanner nach Anspruch 7, wobei
(i) das Befestigungselement-Eingriffsglied (600) des ersten Führungsabschnitts (59a) im Wesentlichen L-förmig ist, um mit dem Befestigungselement in Eingriff zu treten, und
(ii) das Befestigungselement-Eingriffsglied (700) des zweiten Führungsabschnitts (59b) im Wesentlichen L-förmig ist, um mit dem Befestigungselement in Eingriff zu treten.

11. Spanner nach Anspruch 7, wobei
(i) der erste Halsabschnitt (58a) im Wesentlichen U-förmig ist und einen Abschnitt (58a1) umfasst, der im Wesentlichen parallel zum Plattenabschnitt (56) verläuft und sich radial nach innen, optional in Richtung einer Drehachse des Befestigungselements, erstreckt; und
(ii) der zweite Halsabschnitt (58b) im Wesentlichen U-förmig ist und einen Abschnitt (58b1) umfasst, der im Wesentlichen parallel zum Plattenabschnitt (56) verläuft und sich radial nach innen, optional in Richtung der Drehachse des Befestigungselements, erstreckt.

12. Spanner nach Anspruch 7, der ferner eine im Wesentlichen zylindrisch geformte Buchse (60) umfasst, die zwischen dem Arm (20) und der Hülse (70) angeordnet ist, um die der Arm (20) drehbar mit der Basis (10) verbunden ist.

13. Spanner nach Anspruch 7, wobei
(i) der erste gebogene Halsabschnitt (58a) einen Parallelabschnitt (58a1) umfasst, der im Wesentlichen parallel zum Plattenabschnitt (56) verläuft und sich im Wesentlichen radial nach innen erstreckt, und
(ii) der zweite gebogene Halsabschnitt (58b) einen Parallelabschnitt (58b1) umfasst, der im Wesentlichen parallel zum Plattenabschnitt (56) verläuft und sich im Wesentlichen radial nach innen erstreckt, und wobei
(a) sich die erste Verstärkungsstrebe (58a2) von einer Seite des Parallelabschnitts (58a1) des ersten gebogenen Halsabschnitts (58a) erstreckt,
(b) sich die zweite Verstärkungsstrebe (58a3) von einer Seite des Parallelabschnitts (58a1) des ersten gebogenen Halsabschnitts (58a) erstreckt, die der Seite des ersten gebogenen Halsabschnitts (58a) gegenüberliegt, von der sich die erste Verstärkungsstrebe (58a2) erstreckt,
(c) sich die dritte Verstärkungsstrebe (58b2) von einer Seite des Parallelabschnitts (58b1) des zweiten gebogenen Halsabschnitts (58b) erstreckt, und
(b) sich die vierte Verstärkungsstrebe (58b3) von einer Seite des Parallelabschnitts (58b1) des zweiten gebogenen Halsabschnitts (58b) erstreckt, die der Seite des zweiten gebogenen Halsabschnitts (58b) gegenüberliegt, von der sich die dritte Verstärkungsstrebe (58b2) erstreckt.

14. Spanner nach Anspruch 7, wobei
(i) das Befestigungselement-Eingriffsglied (600) des ersten Führungsabschnitts (59a) einen Körper, der sich im Wesentlichen parallel zu einer Drehachse des Befestigungselements erstreckt, und einen Fuß (602) umfasst, der sich vom Körper des ersten Führungsabschnitts (59a) erstreckt, wobei der Körper und der Fuß (602) des ersten Führungsabschnitts (59a) eine im Wesentlichen L-förmige Struktur bilden, und
(ii) das Befestigungselement-Eingriffsglied (700) des zweiten Führungsabschnitts (59b) einen Körper, der sich im Wesentlichen parallel zur Drehachse des Befestigungselements erstreckt, und einen Fuß (702) umfasst, der sich vom Körper des zweiten Führungsabschnitts (59b) erstreckt, wobei der Körper und der Fuß (702) des zweiten Führungsabschnitts (59b) eine im Wesentlichen L-förmige Struktur bilden.

15. Einteilige Spannereinstellvorrichtung nach Anspruch 1, wobei
die erste, zweite, dritte und vierte Verstärkungsstrebe (58a2, 58a3, 58b2, 58b3) dazu angeordnet sind, zumindest eine Verformung des Plattenabschnitts (56) zu reduzieren, die durch ein während der Installation des Spanners auf die einteilige Einstellvorrichtung ausgeübtes Drehmoment verursacht wird.

16. Einteilige Spannereinstellvorrichtung nach Anspruch 15, wobei
(i) der erste gebogene Halsabschnitt (58a) einen Parallelabschnitt (58a1) umfasst, der im Wesentlichen parallel zum Plattenabschnitt (56) verläuft, und
(ii) der zweite gebogene Halsabschnitt (58b) einen Parallelabschnitt (58b1) umfasst, der im Wesentlichen parallel zum Plattenabschnitt (56) verläuft,
(iii) sich die erste Verstärkungsstrebe (58a2) von einer Seite des Parallelabschnitts (58a1) des ersten gebogenen Halsabschnitts (58a) erstreckt,
(iv) sich die zweite Verstärkungsstrebe (58a3) von einer Seite des Parallelabschnitts (58a1) des ersten gebogenen Halsabschnitts (58a) erstreckt, die der Seite des ersten gebogenen Halsabschnitts (58a) gegenüberliegt, von der sich die erste Verstärkungsstrebe (58a2) erstreckt,
(v) sich die dritte Verstärkungsstrebe (58b2) von einer Seite des Parallelabschnitts (58b1) des zweiten gebogenen Halsabschnitts (58b) erstreckt, und
(vi) sich die vierte Verstärkungsstrebe (58b3) von einer Seite des Parallelabschnitts (58b1) des zweiten gebogenen Halsabschnitts (58b) erstreckt, die der Seite des zweiten gebogenen Halsabschnitts (58b) gegenüberliegt, von der sich die dritte Verstärkungsstrebe (58b2) erstreckt.

17. Einteilige Spannereinstellvorrichtung nach Anspruch 16, wobei
(i) sich der Parallelabschnitt (58a1) des ersten gebogenen Halsabschnitts (58a) im Wesentlichen radial nach innen in Richtung einer Drehachse des Befestigungselements erstreckt und
(ii) sich der Parallelabschnitt (58b1) des zweiten gebogenen Halsabschnitts (58b) im Wesentlichen radial nach innen in Richtung der Drehachse des Befestigungselements erstreckt.

18. Einteilige Spannereinstellvorrichtung nach Anspruch 15, wobei
(i) der erste Führungsabschnitt (59a) einen ersten Schenkel (591) und einen zweiten Schenkel (592) umfasst, wobei sich der erste und der zweite Schenkel (591, 592) des ersten Führungsabschnitts (59a) jeweils längs von und im Wesentlichen rechtwinklig zum Plattenabschnitt (56) erstrecken, und
(ii) der zweite Führungsabschnitt (59b) einen dritten Schenkel (593) und einen vierten Schenkel (594) umfasst, wobei sich jeder des dritten und des vierten Schenkels (593, 594) längs von und im Wesentlichen rechtwinklig zum Plattenabschnitt (56) erstreckt, und ferner umfasst:
(a) eine erste hülseneingreifende Lasche (596) zwischen dem ersten und dem zweiten Schenkel (591, 592), die dazu ausgelegt ist, mit einer Schulter einer Hülse (70) in Eingriff zu treten, und
(b) eine zweite hülseneingreifende Lasche (597) zwischen dem dritten und dem vierten Schenkel (593, 594), die dazu ausgelegt ist, mit der Schulter der Hülse (70) in Eingriff zu treten, wobei die erste und die zweite hülseneingreifende Lasche (596, 597) zusammenwirken, um eine axiale Bewegung der einteiligen Spannereinstellvorrichtung zu verhindern.

## Revendications

1. Dispositif de réglage de tendeur monopièce (50) comprenant :
une partie plaque (56) comprenant une ouverture (52) destinée à recevoir un élément de fixation pour l'installation d'un tendeur (100) ;
une première partie col (58a) s'étendant depuis la partie plaque (56) ; et
une seconde partie col (58b) s'étendant depuis la partie plaque (56) sur un côté de la partie plaque (56) opposé au côté de la partie plaque (56) depuis lequel s'étend lune première partie col (58a) ; **caractérisé en ce que** :
la première partie col (58a) est une première partie col courbée et la seconde partie col (58b) est une seconde partie col courbée ; dans lequel le dispositif de réglage de tendeur comprend en outre : une première partie guide (59a) s'étendant depuis la première partie col courbée (58a) et comprenant un organe d'entrée en prise avec élément de fixation (600) construit et agencé pour entrer en prise avec l'élément de fixation ;
une seconde partie guide (59b) s'étendant depuis la seconde partie col courbée (58b) et comprenant un organe d'entrée en prise avec élément de fixation (700) construit et agencé pour entrer en prise avec l'élément de fixation ;
(i) un premier support de renfort (58a2) qui s'étend depuis la première partie col courbée (58a) ;
(ii) un deuxième support de renfort (58a3) qui s'étend depuis un côté de la première partie col courbée (58a) qui est opposé au côté depuis lequel s'étend le premier support de renfort (58a2) ;
(iii) un troisième support de renfort (58b2) qui s'étend depuis un côté de la seconde partie col courbée (58b) ; et
(iv) un quatrième support de renfort (58b3) qui s'étend depuis un côté de la seconde partie col courbée (58b) qui est opposé au côté de la seconde partie col courbée (58b) depuis lequel s'étend le troisième support de renfort (58b2).

2. Dispositif de réglage de tendeur monopièce de la revendication 1, dans lequel :
(i) l'organe d'entrée en prise avec élément de fixation (600) de la première partie guide (59a) comprend un corps et une embase (602) s'étendant depuis le corps de la première partie guide (59a) radialement vers l'intérieur vers un axe de rotation de l'élément de fixation pour entrer en prise avec l'élément de fixation, et
(ii) l'organe d'entrée en prise avec élément de fixation (700) de la seconde partie guide (59b) comprend un corps et une embase (702) s'étendant depuis le corps de la seconde partie guide (59b) radialement vers l'intérieur vers l'axe de rotation de l'élément de fixation pour entrer en prise avec l'élément de fixation.

3. Dispositif de réglage de tendeur monopièce de la revendication 2, dans lequel :
(i) l'embase (602) de la première partie guide (59a) comprend une extrémité de bout (604) destinée à entrer en prise avec l'élément de fixation, et
(ii) l'embase (702) de la seconde partie guide (59b) comprend une extrémité de bout (704) destinée à entrer en prise avec l'élément de fixation.

4. Dispositif de réglage de tendeur monopièce de la revendication 1, dans lequel :
(i) l'organe d'entrée en prise avec élément de fixation (600) de la première partie guide (59a) s'étend radialement vers l'intérieur vers un axe de rotation de l'élément de fixation pour entrer en prise avec l'élément de fixation durant la rotation du dispositif de réglage monopièce, et
(ii) l'organe d'entrée en prise avec élément de fixation (700) de la seconde partie guide (59b) s'étend radialement vers l'intérieur vers un axe de rotation de l'élément de fixation pour entrer en prise avec l'élément de fixation durant la rotation du dispositif de réglage monopièce.

5. Dispositif de réglage de tendeur monopièce de la revendication 2, dans lequel :
une surface d'entrée en prise avec élément de fixation de l'embase (602) de la première partie guide (59a) et une surface d'entrée en prise avec élément de fixation de l'embase (702) de la seconde partie guide (59b) forment un arc ayant un rayon de courbure qui est sensiblement égal à un rayon de courbure de l'élément de fixation.

6. Dispositif de réglage de tendeur monopièce de la revendication 2, dans lequel :
(i) l'embase (602) de la première partie guide (59a) comprend une surface d'entrée en prise avec élément de fixation construite pour entrer en prise avec l'élément de fixation, et
(ii) l'embase (702) de la seconde partie guide (59b) comprend une surface d'entrée en prise avec élément de fixation pour entrer en prise avec l'élément de fixation.

7. Tendeur (100), comprenant :
une base (10) ;
un manchon (70) relié à la base (10), le manchon (70) ayant un alésage central (72) défini dans celui-ci ;
un bras (20) en prise de façon pivotante avec la base (10) autour du manchon (70) ;
une poulie (30) tourillonnée sur le bras (20) ;
un ressort de torsion (40) en prise entre le bras (20) et la base (10) ; et
un dispositif de réglage de tendeur excentrique monopièce (50) selon la revendication 1, monté de façon rotative à l'intérieur de l'alésage central (72) du manchon (70).

8. Tendeur de la revendication 7, dans lequel
(i) l'organe d'entrée en prise avec élément de fixation (600) de la première partie guide (59a) s'étend radialement vers l'intérieur vers un axe de rotation de l'élément de fixation pour entrer en prise avec l'élément de fixation, et
(ii) l'organe d'entrée en prise avec élément de fixation (700) de la seconde partie guide (59b) s'étend radialement vers l'intérieur vers un axe de rotation de l'élément de fixation pour entrer en prise avec l'élément de fixation.

9. Tendeur de la revendication 7, dans lequel
(i) l'organe d'entrée en prise avec élément de fixation (600) de la première partie guide (59a) comprend un corps s'étendant sensiblement perpendiculairement à la partie plaque (56) et une embase (602) s'étendant sensiblement perpendiculairement au corps de la première partie guide (59a) et radialement vers l'intérieur vers un axe de rotation de l'élément de fixation pour entrer en prise avec l'élément de fixation, et
(ii) l'organe d'entrée en prise avec élément de fixation (700) de la seconde partie guide (59b) comprend un corps s'étendant sensiblement perpendiculairement à la partie plaque (56) et une embase (702) s'étendant sensiblement perpendiculairement au corps de la seconde partie guide (59b) et radialement vers l'intérieur vers un axe de rotation de l'élément de fixation pour entrer en prise avec l'élément de fixation.

10. Tendeur de la revendication 7, dans lequel
(i) l'organe d'entrée en prise avec élément de fixation (600) de la première partie guide (59a) est sensiblement en forme de L pour entrer en prise avec l'élément de fixation, et
(ii) l'organe d'entrée en prise avec élément de fixation (700) de la seconde partie guide (59b) est sensiblement en forme de L pour entrer en prise avec l'élément de fixation.

11. Tendeur de la revendication 7, dans lequel :
(i) la première partie col (58a) est sensiblement en forme de U et comprend une section (58a1) qui est sensiblement parallèle à la partie plaque (56) et s'étend radialement vers l'intérieur, facultativement vers un axe de rotation de l'élément de fixation ; et
(ii) la seconde partie col (58b) est sensiblement en forme de U et comprend une section (58b1) qui est sensiblement parallèle à la partie plaque (56) et s'étend radialement vers l'intérieur, facultativement vers l'axe de rotation de l'élément de fixation.

12. Tendeur de la revendication 7, qui comprend en outre une douille de forme sensiblement cylindrique (60) positionnée entre le bras (20) et le manchon (70) autour duquel le bras (20) est en prise de façon pivotante avec la base (10).

13. Tendeur de la revendication 7, dans lequel :
(i) la première partie col courbée (58a) comprend une section parallèle (58a1) qui est sensiblement parallèle à la partie plaque (56) et s'étend sensiblement radialement vers l'intérieur, et
(ii) la seconde partie col courbée (58b) comprend une section parallèle (58b1) qui est sensiblement parallèle à la partie plaque (56) et s'étend sensiblement radialement vers l'intérieur, et dans lequel :
(a) le premier support de renfort (58a2) s'étend depuis un côté de la section parallèle (58a1) de la première partie col courbée (58a),
(b) le deuxième support de renfort (58a3) s'étend depuis un côté de la section parallèle (58a1) de la première partie col courbée (58a) qui est opposé au côté de la première partie col courbée (58a) depuis lequel s'étend le premier support de renfort (58a2),
(c) le troisième support de renfort (58b2) s'étend depuis un côté de la section parallèle (58b1) de la seconde partie col courbée (58b), et
(b) le quatrième support de renfort (58b3) s'étend depuis un côté de la section parallèle (58b1) de la seconde partie col courbée (58b) qui est opposé au côté de la seconde partie col courbée (58b) depuis lequel s'étend le troisième support de renfort (58b2).

14. Tendeur de la revendication 7, dans lequel :
(i) l'organe d'entrée en prise avec élément de fixation (600) de la première partie guide (59a) comprend un corps s'étendant sensiblement parallèlement à un axe de rotation de l'élément de fixation et une embase (602) s'étendant depuis le corps de la première partie guide (59a), le corps et l'embase (602) de la première partie guide (59a) formant une structure sensiblement en forme de L, et
(ii) l'organe d'entrée en prise avec élément de fixation (700) de la seconde partie guide (59b) comprend un corps s'étendant sensiblement parallèlement à l'axe de rotation de l'élément de fixation et une embase (702) s'étendant depuis le corps de la seconde partie guide (59b), le corps et l'embase (702) de la seconde partie guide (59b) formant une structure sensiblement en forme de L.

15. Dispositif de réglage de tendeur monopièce de la revendication 1, dans lequel :
les premier, deuxième, troisième, et quatrième supports de renfort (58a2, 58a3, 58b2, 58b3) sont agencés pour aider au moins à réduire la déformation de la partie plaque (56) résultant de tout couple appliqué sur le dispositif de réglage monopièce durant l'installation du tendeur.

16. Dispositif de réglage de tendeur monopièce de la revendication 15, dans lequel :
(i) la première partie col courbée (58a) comprend une section parallèle (58a1) qui est sensiblement parallèle à la partie plaque (56), et
(ii) la seconde partie col courbée (58b) comprend une section parallèle (58b1) qui est sensiblement parallèle à la partie plaque (56),
(iii) le premier support de renfort (58a2) s'étend depuis un côté de la section parallèle (58a1) de la première partie col courbée (58a),
(iv) le deuxième support de renfort (58a3) s'étend depuis un côté de la section parallèle (58a1) de la première partie col courbée (58a) qui est opposé au côté de la première partie col courbée (58a) depuis lequel s'étend le premier support de renfort (58a2),
(v) le troisième support de renfort (58b2) s'étend depuis un côté de la section parallèle (58b1) de la seconde partie col courbée (58b), et
(vi) le quatrième support de renfort (58b3) s'étend depuis un côté de la section parallèle (58b1) de la seconde partie col courbée (58b) qui est opposé au côté de la seconde partie col courbée (58b) depuis lequel s'étend le troisième support de renfort (58b2).

17. Dispositif de réglage de tendeur monopièce de la revendication 16, dans lequel
(i) la section parallèle (58a1) de la première partie col courbée (58a) s'étend sensiblement radialement vers l'intérieur vers un axe de rotation de l'élément de fixation, et
(ii) la section parallèle (58b1) de la seconde partie col courbée (58b) s'étend sensiblement radialement vers l'intérieur vers l'axe de rotation de l'élément de fixation.

18. Dispositif de réglage de tendeur monopièce de la revendication 15, dans lequel
(i) la première partie guide (59a) comprend un premier pied (591) et un deuxième pied (592), les premier et deuxième pieds (591, 592) de la première partie guide (59a) chacun s'étendant longitudinalement depuis, et sensiblement perpendiculairement à, la partie plaque (56), et
(ii) la seconde partie guide (59b) comprend un troisième pied (593) et un quatrième pied (594), chacun des troisième et quatrième pieds (593, 594) s'étendant longitudinalement depuis, et sensiblement perpendiculairement à, la partie plaque (56), et qui comprend en outre
(a) une première patte d'entrée en prise avec manchon (596) positionnée entre le premier et deuxième pieds (591, 592) et agencée pour entrer en prise avec un épaulement d'un manchon (70), et
(b) une seconde patte d'entrée en prise avec manchon (597) positionnée entre les troisième et quatrième pieds (593, 594) et agencée pour entrer en prise avec l'épaulement du manchon (70), les première et seconde pattes d'entrée en prise avec manchon (596, 597) coopérant pour empêcher le mouvement axial du dispositif de réglage de tendeur monopièce.
